## Europäisches Patentamt

## European Patent Office

## Office européen des brevets

(11) Publication number: **0 145 169**
**B1**

# EUROPEAN PATENT SPECIFICATION

(12)

(45) Date of publication of the patent specification:
25.11.87

(51) Int. Cl.⁴: **G 01 T 1/20, B 24 B 1/00**

(21) Application number: 84307055.8

(22) Date of filing: 15.10.84

(54) Scintillation crystals with highly reflective surfaces.

(30) Priority: 14.11.83 US 551400

(43) Date of publication of application:
19.06.85 Bulletin 85/25

(45) Publication of the grant of the patent:
25.11.87 Bulletin 87/48

(84) Designated Contracting States:
DE FR GB NL

(56) References cited:
WO-A-81/00457
GB-A-1 118 473

THE REVIEW OF SCIENTIFIC INSTRUMENTS, vol.
24, no. 11, November 1953, pages 1045-1050, NEW
YORK (US), C.J. BORKOWSKI et al.: "Gamma-ray
energy resolution with Nal-Tll scintillation
spectrometers"
PATENTS ABSTRACTS OF JAPAN, vol. 7, no. 177
(M-233)(1322), August 5, 1983

(73) Proprietor: FILTROL CORPORATION, 300 Lakeside
Drive, Oakland California 94643 (US)

(72) Inventor: Mataraza, George Anthony, 21731 Ball
Avenue, Euclid Ohio 44123 (US)
Inventor: Anderson, Russell Adam, 21411 Kenyon
Street, Maple Heights Ohio 44137 (US)
Inventor: Milliken, Donald Guy, 606 Ensign Road,
West Farmington Ohio 44491 (US)

(74) Representative: Oliver, Roy Edward, POLLAK
MERCER & TENCH High Holborn House 52- 54
High Holborn, London WC1V 6RY (GB)

## Description

This invention relates to inorganic scintillation crystals and the method of preparing them, especially for use in various medical and industrial applications. More specifically, the invention relates to the use of a specific type of reflective powder, as a grinding or abrading medium, in preparing the surfaces of the inorganic crystal. In use, the crystal typically is optically coupled to one or more photomultiplier tubes or other detection devices.

For years, various inorganic crystals have been used as scintillators for gamma ray and charged particle detection. Among these have been such materials as NaI-(Tl), $CaF_2(Eu)$, CsI(Na), CsI(Tl) and $^6LiI(Eu)$, bismuth germanate and $CdWO_4$. A scintillator is a material capable of converting energy lost by ionizing radiation into pulses of light. Light pulses emitted during scintillation are detected by appropriate means, such as a sensitive photomultiplier tube or a silicon diode.

Various techniques are used during the preparation of such crystals and in the assembly or mounting of crystals in detectors, in order to optimize the transfer of light from the crystal to the detector. Scintillation detectors are commonly used in medical diagnostic devices. One such device utilizes a camera which is positioned in a stationary relationship with respect to a patient and portrays a spatial distribution of radioactivity, upon the introduction of a radioactive source such as an isotope into the body of the patient. The crystal scintillates as it converts impinging gamma rays from the isotope into light energy. This light energy is transmitted to an array of photo tubes. Each photo tube stimulated by light emits an electrical signal which is proportional to the light energy received by the tube.

Photomultiplier tubes typically are placed relative to one another so that they view overlapping co-extensive areas of the crystal. A common practice is to use masks at a selected location between the photomultiplier tubes and the crystal to reflect and diffuse the scintillation flashes, so as to achieve a generalized distribution of light to the tubes. The spatial resolution or ability of the tubes to detect and measure accurately and uniformly the occurrence and intensity of events within a crystal is determined by the ability of the system to diffuse and reflect the light.

Scintillation crystals used in an imaging device are typically prepared from melt-grown crystal ingots. An ingot is cut or cleaved to produce a blank, which is then machined and finished to final tolerances by grinding. Silicon carbide, because of the relative hardness of its particles, is commonly used as a grinding vehicle as is emery - see e.g Review of Scientific Instruments, vol 24, No.11, Nov. 1953 pp. 1045-1050, New York C.J Borkowski et al: "Gamma ray energy resolution with Na I-T1 I Scintillation spectrometers". This material absorbs considerable light. Thus it must be completely removed from the crystal surface, to prevent the undesirable absorption of light generated within the crystal. To the extent the light is absorbed, it is not available to be seen by the photomultiplier tubes. It is difficult to remove all of the powder, even by washing, because removal could degrade or change the diffusion properties of the crystal surface. Thus some of the silicon carbide powder invariably remains embedded in the surface of the crystal.

Aluminium oxide has been used in the past for the polishing of various crystalline surfaces. Because the object of polishing is to produce a specular and not a diffuse surface, it is important to remove all foreign substances from the surface, including all traces of the polishing material.

The use of aluminium oxide and magnesium oxide as reflective materials in scintillation detectors is well known, as evidenced by the disclosure of US-A-4 066 908, which describes a well-type scintillator in which the reflective powder is packed between the crystal and the housing.

According to one aspect of the present invention, a method of manufacture of an inorganic scintillation crystal is provided, in which the crystal surface is prepared by grinding, and is characterized in that the grinding medium used in the final stage of grinding is a finely-divided particulate substance having a high reflectivity in a predetermined light emission range and that particles of the substance are left embedded in the surface of the crystal after grinding, whereby the light output of the crystal in the predetermined light emission range is improved. The manufacture of scintillators by the method of the invention leads to an improvement in the total light incident on photomultiplier tubes, resulting in improved spatial resolution, increased pulse height and better energy resolution.

According to another aspect of the invention, a scintillation crystal is characterized by having at least one finished surface which has been finished by grinding with a finely-divided substance of high reflectivity, in such a manner as to leave embedded in said surface particles of said substance having a size in the range from 150 to 400 grit said substance having high reflectivity in the spectral region of emission from 200 to 600 nanometres.

The invention thus comprises the use of a highly-reflective abrasive powder, such as aluminium oxide or magnesium oxide, to grind the surfaces of an inorganic scintillation crystal. After grinding, the excess powder is removed, e.g. by brushing or blowing, after which a residue remains on and embedded in the surface. The presence of this residue decreases the absorption at the crystal surface and alters the diffusion characteristics of the crystal.

This invention is applicable to a wide range of self-activated and doped inorganic crystalline scintillators, including such materials as NaI(T1), $CaF_2(Eu)$, CsI(Na), CsI(T1), $^6LiI(Eu)$, T1C1(Be,I), CsF, $BaF_2$, $Bi_4Ge_3O_{12}$, KI(T1), $CaWO_4$ and $CdWO_4$. These scintillators have a maximum emission spectrum in the range from 325 nanometres for $BaF_2$ to 565 nanometres for CsI(T1). Several of the materials, such as NaI(T1), CsI(Na), LiI(Eu), CsF and KI(T1), are hygroscopic and thus need special handling in a dry environment during cutting, machining and grinding. These crystals are then enclosed in a moisture proof holder or container to prevent hydration of the crystal.

Aluminium oxide is a preferred grinding powder. However, other materials possessing attributes of hardness and high reflectivity may be used. Examples of other suitable materials are magnesium oxide and titanium oxide. The particle size of the grinding medium is typically from 150 to 400 grit, depending on the surface finish desired.

Care must be taken, when grinding a hygroscopic crystal, to prevent the introduction of moisture during grinding. Thus the grinding powder must be treated, such as by heating, to remove all moisture and the grinding must take place in a moisture-free atmosphere, such as in a dry box.

The following example provides a more complete disclosure of the present invention.

## EXAMPLE

A 75 mm (3 inch) nominal diameter slab of NaI(T1) crystal was cut from a larger ingot and was machined to a circular disc having a diameter of 75 mm (3 inches) and a thickness of 10 mm (3/8″). The surfaces of the disc were lapped with a 280 grit aluminium oxide grinding powder to give a smooth matte finish. Excess aluminium oxide was brushed off the surface of the disc, which was then coupled to a glass window, which in turn was coupled to a model R-878 photomultiplier tube manufactured by Hamamatsu Corporation. Clear silicon compounds were used to couple the crystal to the glass and the glass to the tube. The crystal was exposed to a collimated $Co^{57}$ gamma ray source. After testing, the same disc was reground by conventional grinding techniques using silicon carbide. It was coupled to the same photomultiplier tube and measurements were taken. The pulse height resolution of the conventionally-finished crystal was 71 units, whereas that of the crystal with surfaces finished with aluminium oxide was 83 units, an improvement of 17 %. Likewise, it was found that the energy resolution od the crystal prepared according to the present invention was 9.6 %, as compared to an energy resolution of 11 % for the prior art crystal an improvement of approximately 13%.

As previously mentioned, the invention is applicable to a wide range of inorganic scintillation crystals. It consists of using a reflective powder as a grinding medium to improve the reflectivity of the crystal in its light emission.

Modifications can be made in carrying out the present invention as defined in the claims without departing from the scope thereof. For example, particles having different grit sizes can be blended together in order to produce a grinding medium capable of achieving a predetermined finish on the surface of the crystal. Furthermore, the $Al_2O_3$ may be blended with MgO or with other grinding materials to change or to control the range of spectral emission.

It should be emphasized that other abrasive materials may be used in carrying out the present invention, but only insofar as their reflectivity coincides with the emission peak of the crystal and they are chemically inert with respect to the crystal.

The technique of this invention can be used to grind specific surfaces of a crystal in combination with appropriate masking techniques, so as to provide areas within the crystal or on the crystal surface which have differing degrees of reflectivity and absorptiveness.

## Claims

1. A method of manufacture of an inorganic scintillation crystal, in which the crystal surface is prepared by grinding, characterized in that the grinding medium used in the final stage of grinding is a finely-divided particulate substance having a high reflectivity in a predetermined light emission range and that particles of the substance are left embedded in the surface of the crystal after grinding, whereby the light output of the crystal in the predetermined light emission range is improved.

2. A method according to claim 1, wherein the grinding medium is a powder reflective in the spectral region of emission from 200 to 600 nanometres.

3. A method according to claim 2, wherein the excess reflective powder is removed from the surface of the scintillation crystal, while leaving particles embedded in such surface.

4. A method according to claim 1, 2 or 3, wherein the particulate substance comprises aluminium oxide.

5. A method according to claim 4, wherein the particle size of the aluminium oxide is in the range from 150 grit to 400 grit.

6. A method according to any preceding claim, wherein the scintillation crystal is NaI(T1).

7. A method according to any of claims 1 to 5, wherein the scintillation crystal is selected from $CaF_2(Eu)$, CsI(Na), CsI(T1), $^6LiI(Eu)$, T1C1(Be,I), CsF, $BaF_2$, $Bi_4Ge_3O_{12}$, KI(T1), $CaWO_4$ and $CdWO_4$.

8. A scintillation crystal, characterized by having at least one finished surface which has been finished by grinding with a finely-divided particulate inorganic substance having a high reflectivity, in such a manner as to leave embedded in said surface particles of said substance having a size in the range from 150 to 400 grit said substance having high reflectivity in the spectral region of emission from 200 to 600 nanometres.

9. A crystal according to claim 8, wherein the powder is selected from aluminium oxide and magnesium oxide.

10. A crystal according to claim 8 or 9, composed of NaI(T1).

## Patentansprüche

1. Verfahren zur Herstellung eines anorganischen Szintillationskristalls, bei welchem die Kristalloberfläche durch Schleifen bearbeitet wird, dadurch gekennzeichnet, daß das Schleifmittel, das in der Endstufe des Schleifens verwendet wird, eine feinzerteilte partikulierte Substanz ist, die eine hohe Reflexion in einem vorbestimmten Lichtemissionsbereich hat, und daß Partikel der Substanz in der Oberfläche des Kristalls nach dem Schleifen eingebettet zurückgelassen werden, wodurch der Lichtausgang des Kristalls in dem vorbestimmten Lichtemissionsbereich verbessert wird.

2. Verfahren nach Anspruch 1, dadurch gekennzeichnet, daß das Schleifmittel ein Pulver ist, das in dem Spektralbereich der Emission von 200 bis 600 nm reflektiert.

3. Verfahren nach Anspruch 2, dadurch gekennzeichnet, daß das überschüssige reflektive Pulver von der Oberfläche des Szintillationskristalls entfernt wird, während Partikel in solcher Oberfläche eingebettet zurückbleiben.

4. Verfahren nach Anspruch 1, 2 oder 3, dadurch gekennzeichnet, daß die partikulierte Substanz Aluminiumoxid ist.

5. Verfahren nach Anspruch 4, dadurch gekennzeichnet, daß die Partikelgröße des Aluminiumoxids im Bereich von 150 Grit bis 400 Grit liegt.

6. Verfahren nach irgendeinem der vorhergehenden Ansprüche, dadurch gekennzeichnet, daß das Szintillationskristall NaI(T1) ist.

7. Verfahren nach irgendeinem der Ansprüche 1 bis 5, dadurch gekennzeichnet, daß das Szintillationskristall ausgewählt ist aus der Gruppe von $CaF_2(Eu)$, CsI(Na), CsI(T1), $^6LiI(Eu)$, T1C1(Be,I), CsF, $BaF_2$, $Bi_4Ge_3O_{12}$, KI(T1), caWO$_4$ und CdWO$_4$.

8. Szintillationskristall, dadurch gekennzeichnet, daß es mindestens eine fertig bearbeitete Oberfläche hat, welche durch Schleifen mit einer feinzerteilten partikulierten anorganischen Substanz hoher Reflexion so fertig bearbeitet worden ist, daß in der Oberfläche Partikel dieser Substanz eingebettet zurückbleiben, wobei die Partikel eine Größe im Bereich von 150 bis 400 Grit haben, und die Substanz eine hohe Reflexion in dem Spektralbereich der Emission von 200 bis 600 nm hat.

9. Kristall nach Anspruch 8, dadurch gekennzeichnet, daß das Pulver Aluminiumoxid oder Magnesiumoxid ist.

10. Kristall nach Anspruch 8 oder 9, bestehend aus NaI(T1).

## Revendications

1. Procédé pour fabriquer un cristal minéral a scintillation, dans lequel la surface du cristal est préparée par meulage, caractérisé en ce que le milieu de meulage utilisé lors de l'étape finale de meulage est une substance particulaire finement divisée, possédant un pouvoir réfléchissant élevé dans une plage prédéterminée d'émission de lumière et que des particules de la substance restent enchâssées dans la surface du cristal après le meulage, ce qui a pour effet que la puissance lumineuse de sortie du cristal dans la plage prédéterminée d'émission de lumière est améliorée.

2. Procédé selon la revendication 1, selon lequel le milieu de meulage est une poudre qui fournit une réflexion dans la région spectrale d'émission s'étendant de 200 à 600 nanomètres.

3. Procédé selon la revendication 2, selon lequel on retire la poudre réfléchissante présente en excès, de la surface du cristal à scintillation, tout en conservant des particules à l'état enchâssé dans ladite surface.

4. Procédé selon l'une des revendications 1, 2 ou 3, selon lequel la substance particulaire contient de l'oxyde d'aluminium.

5. Procédé selon la revendication 4, selon lequel la taille des particules de l'oxyde d'aluminium se situe à un numéro de grosseur situé dans la gamme allant de 150 à 400.

6. Procédé selon l'une quelconque des revendications précédentes, selon lequel le cristal à scintillation est du NaI (T1).

7. Procédé selon l'une quelconque des revendications 1 à 5, selon lequel le cristal à scintillation est choisi parmi $CaF_2(Eu)$, CsI(Na), CsI(T1), $^6LiI(Eu)$, T1C1(Be,I),CsF, $BaF_2$, $Bi_4GeO_{12}$ KI(T1) $CaWO_4$ et $CdWO_4$.

8. Cristal à scintillation, caractérisé en ce qu'il comporte au moins une surface finie, qui a subi une finition par meulage à l'aide d'une substance minérale particulaire finement divisée possédant un pouvoir réfléchissant élevé, de manière à laisser subsister, à l'état enchâssé dans ladite surface, des particules de ladite substance possédant une taille dont le numéro de grosseur se situe dans la gamme allant de 150 à 400, ladite substance possédant un pouvoir réfléchissant élevé dans la région spectrale d'émission allant de 200 à 600 nanomètres.

9. Cristal selon la revendication 8, dans lequel la poudre est choisie à partir de l'oxyde d'aluminium et de l'oxyde de magnésium.

10. Cristal selon la revendication 8 ou 9, constitué par du NaI(Tl).